# EUROPEAN PATENT APPLICATION

(11) **EP 4 632 542 A1**
(43) Date of publication of application: **15.10.2025**
(21) Application number: 25169099.6
(22) Date of filing: 08.04.2025
(51) Int. Cl.: G06F 3/01

(54) **AUTOMATIC BOUNDARY CREATION AND RELOCALIZATION**

(30) Priority: 08.04.2024 US 202418629769
(71) Applicant: Meta Platforms Technologies, LLC, Menlo Park, CA 94025 (US)
(72) Inventor: Tanner, Christopher Richard, Menlo Park (US); Hajyahia, Mohamad, Menlo Park (US); Perry, Adi, Menlo Park (US); Valori, James Alexander, Menlo Park (US); Nitzan, Asaf, Menlo Park (US)
(74) Representative: Murgitroyd & Company

(57) **Abstract**

Aspects of the present disclosure relate to instant boundary creation for a virtual reality (VR) experience. An artificial reality (XR) system, while rendering an augmented reality (AR) or mixed reality (MR) environment, can scan and gather visual characteristic data for a user's real-world environment in the background. When the XR system detects an intent to enter VR mode (e.g., by launching a VR application), the XR system can generate a recommendation for a boundary for the real-world space, which can include a type of interaction mode (e.g., moveable or stationary mode). Based on the user's response to the recommendation, the XR system can prompt the user to scan the real-world space further and/or manually adjust the boundary, while continuing to scan and gather visual characteristic data in the background. Some implementations can alternatively or additionally automatically relocalize a real-world space based on a generated boundary.

## Description

### TECHNICAL FIELD

The present disclosure is directed to automatic boundary creation for, and localization of, an artificial reality (XR) system, for rendering of an XR environment.

### BACKGROUND

Artificial reality (XR) devices are becoming more prevalent. As they become more popular, the applications implemented on such devices are becoming more sophisticated. Mixed reality (MR) and augmented reality (AR) applications can provide interactive three-dimensional (3D) experiences that combine images of the real-world with virtual objects, while virtual reality (VR) applications can provide an entirely self-contained 3D computer environment. For example, an MR or AR application can be used to superimpose virtual objects over a real scene that is observed by a camera. A real-world user in the scene can then make gestures captured by the camera that can provide interactivity between the real-world user and the virtual objects. AR, MR, and VR (together XR) experiences can be observed by a user through a head-mounted display (HMD), such as glasses or a headset. An HMD can have a pass-through display, which allows light from the real-world to pass through a lens to combine with light from a waveguide that simultaneously emits light from a projector in the HMD, allowing the HMD to present virtual objects intermixed with real objects the user can actually see.

### SUMMARY OF INVENTION

In accordance with the invention in a first aspect, a method for automatically generating a boundary for a virtual reality experience comprises: rendering, on an artificial reality system of a user, an artificial reality environment, the artificial reality environment including one or more virtual objects overlaid on a view of a real-world space; while rendering the artificial reality environment, automatically detecting characteristics of the real-world space by scanning the real-world space as the artificial reality system is moved; detecting a trigger indicative of an intent to execute the virtual reality experience on the artificial reality system; in response to the detected trigger, generating a boundary for the real-world space based on the detected characteristics of the scanned real-world space; determining that the generated boundary covers less than a threshold percentage of the real-world space; based on the determining that the generated boundary covers less than the threshold percentage of the real-world space, further scanning the real-world space by the artificial reality system; updating the generated boundary, based on the further scanning of the real-world space; and executing the virtual reality experience relative to the generated boundary for the real-world space.

In some embodiments, the further scanning the real-world space is in response to a prompt, rendered by the artificial reality system, to make further movement of the artificial reality system, and the method further comprises obtaining additional characteristics of the real-world space in response to the further movement of the artificial reality system.

In some embodiments, the method further comprises, prior to executing the virtual reality experience, determining an interaction mode for the virtual reality experience based on the generated boundary, the interaction mode being based on either A) detecting greater than a threshold amount of movement, of the artificial reality system, while scanning the real-world space, or B) detecting a seated or standing posture of the user having less than the threshold amount of movement.

In some embodiments, the determined interaction mode is modifiable by the user via the artificial reality system.

In some embodiments, the method further comprises modifying the generated boundary based on one or more manual adjustments made by the user.

In some embodiments, the detected trigger is a launch of the virtual reality experience on the artificial reality system.

In some embodiments, scanning the real-world space includes generating a mesh corresponding to the real-world space, and generating the boundary includes processing the mesh, the processing including at least one of: collapsing one or more variations in the mesh corresponding to at least one of a wall, a ceiling, a floor, or any combination thereof, onto the a detected flat surface, clipping the mesh to the artificial reality space model where the mesh extends beyond the detected flat surface, simplifying the mesh corresponding to the at least one flat surface, determining that the mesh is complete by identifying that a threshold percentage of the real-world space is covered by the mesh, or any combination thereof.

In some embodiments of the method, the artificial reality system scans the real-world space using at least one of one or more cameras, one or more depth sensors, or any combination thereof.

In some embodiments, the boundary is generated by estimating depth data for the scanned real-world space, and the depth data is estimated by applying a machine learning model to one or more images of the scanned real-world space.

In some embodiments, the method further comprises, based on the detected trigger, and prior to generating the boundary, determining that relocalization, of the artificial reality system in the real-world space, failed.

In some embodiments, the real-world space is scanned without notifying the user via the artificial reality system.

In some embodiments, the method further comprises, prior to executing the virtual reality experience, displaying the generated boundary on the artificial reality system.

In accordance with the invention in a further aspect, a computer-readable storage medium storing instructions that, when executed by a computing system, cause the computing system to perform a process for automatically generating a boundary for a virtual reality experience, the process comprising: rendering, on an artificial reality system of a user, an artificial reality environment, the artificial reality environment including one or more virtual objects overlaid on a view of a real-world space; while rendering the artificial reality environment, automatically detecting characteristics of the real-world space by scanning the real-world space, as the artificial reality system is moved, without notifying a user of the artificial reality system; detecting a trigger indicative of an intent to execute the virtual reality experience on the artificial reality system; in response to the detected trigger, generating a boundary for the real-world space based on the detected characteristics of the scanned real-world space; and executing the virtual reality experience relative to the generated boundary for the real-world space.

For example, a computer-readable storage medium storing instructions that, when executed by a computing system, cause the computing system to perform a process for automatically generating a boundary for a virtual reality experience, the process comprising the method of the first aspect of the invention.

In some embodiments, the process further comprises: determining that the generated boundary covers less than a threshold percentage of the real-world space; based on the determining that the generated boundary covers less than the threshold percentage of the real-world space, further scanning the real-world space by the artificial reality system; and updating the generated boundary, based on the further scanning of the real-world space.

In some embodiments, the further scanning the real-world space is in response to a prompt, rendered by the artificial reality system, to make further movement of the artificial reality system, and the process further comprises obtaining additional characteristics of the real-world space in response to the further movement of the artificial reality system.

In some embodiments, the process further comprises, prior to executing the virtual reality experience, determining an interaction mode for the virtual reality experience based on the generated boundary, the interaction mode being based on either A) detecting greater than a threshold amount of movement, of the artificial reality system, while scanning the real-world space, or B) detecting a seated or standing posture of the user having less than the threshold amount of movement.

In some embodiments, the determined interaction mode is modifiable by the user via the artificial reality system.

In accordance with the invention in a further aspect, a computing system for automatically generating a boundary for a virtual reality experience comprises one or more processors and one or more memories storing instructions that, when executed by the one or more processors, cause the computing system to perform a process comprising: rendering, on an artificial reality system of a user, an artificial reality environment, the artificial reality environment including one or more virtual objects overlaid on a view of a real-world space; while rendering the artificial reality environment, automatically detecting characteristics of the real-world space by scanning the real-world space, as the artificial reality system is moved, without user input causing the real-world space to be scanned; detecting a trigger indicative of an intent to execute the virtual reality experience on the artificial reality system; in response to the detected trigger, generating a boundary for the real-world space based on the detected characteristics of the scanned real-world space; and executing the virtual reality experience relative to the generated boundary for the real-world space.

For example, a computing system for automatically generating a boundary for a virtual reality experience comprises one or more processors and one or more memories storing instructions that, when executed by the one or more processors, cause the computing system to perform a process comprising the method of the first aspect of the invention.

In some embodiments, the process further comprises determining that the generated boundary covers less than a threshold percentage of the real-world space and, based on the determining that the generated boundary covers less than the threshold percentage of the real-world space, further scanning the real-world space by the artificial reality system and updating the generated boundary, based on the further scanning of the real-world space.

In some embodiments, the process further comprises, based on the detected trigger, and prior to generating the boundary, determining that relocalization, of the artificial reality system in the real-world space, failed.

The medium of the second aspect and the system of the third aspect are for example configured to perform some or all of the steps of the method of the first aspect, and preferred features and illustrative embodiments of each aspect described herein will be understood to be applicable to all three aspects by analogy.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for automatically generating a boundary for a virtual reality (VR) experience.
Figure 6A is a conceptual diagram illustrating an example view, on an XR system, of an XR experience rendered while scanning a real-world space surrounding the XR system.
Figure 6B is a conceptual diagram illustrating an example view, on an XR system, of an option to launch a VR experience.
Figure 6C is a conceptual diagram illustrating an example view, on an XR system, of a recommendation for an interaction mode for a VR experience.
Figure 6D is a conceptual diagram illustrating an example view, on an XR system, of a boundary generated for a VR experience while rendering an XR experience.
Figure 6E is a conceptual diagram illustrating an example view, on an XR system, of a VR experience rendered in relation to a boundary generated by the XR system.
Figure 7 is a flow diagram illustrating a process used in some implementations of the present technology for localizing an XR system in a real-world space.
Figure 8A is a conceptual diagram illustrating an example view, on an XR system, of a mesh being generated for a real-world space as a user looks around the real-world space.
Figure 8B is a conceptual diagram illustrating an example view, on an XR system, of a completed mesh of a real-world space in which the XR system has localized or relocalized.
Figure 8C is a conceptual diagram illustrating an example view, on an XR system, of an XR experience being rendered relative to the localized or relocalized real-world space.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure relate to instant boundary creation for a virtual reality (VR) experience. An artificial reality (XR) system, while rendering an augmented reality (AR) or mixed reality (MR) environment (which does not require a boundary), can scan and gather visual characteristic data for a user's real-world environment in the system background. When the XR system detects an intent to enter VR mode (e.g., by launching a VR application), the XR system can generate a recommendation for a boundary for the real-world space, which can include a type of interaction mode (e.g., moveable or stationary mode). Based on the user's response to the recommendation, the XR system can prompt the user to scan the real-world space further and/or manually adjust the boundary, while continuing to scan and gather visual characteristic data in the background. In some implementations, however, the initial background scan can be sufficient to establish the boundary, and the XR system can render the VR mode without further scanning, thereby rendering manual scene capture unnecessary.

Aspects of the present disclosure further relate to relocalization of an XR system in a real-world space. When entering an XR experience, automatic relocalization of the XR system can fail if the user is in a new room or if the XR system does not recognize the room. Thus, the XR system can prompt the user to look around the room, thereby generating a mesh that can be compared with existing room meshes. If the mesh matches an existing room mesh, the XR system can align the meshes, pull existing spatial anchor and scene data, and pick up where the user left off in a previous XR experience. If the mesh does not match an existing room mesh, the XR system can use the newly scanned mesh to establish a new room in which to execute the XR experience.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Implementations described herein provide specific technological improvements in the field of artificial reality. According to some implementations, an XR system can scan a real-world space "in the background" while in AR or MR mode, thereby generating a boundary that can be used to seamlessly transition to VR mode. In some implementations, the XR system can automatically attempt to relocalize the XR system in a real-world space, initially unrecognized by the XR system, by generating a mesh of the real-world space to compare to existing, stored meshes for known real-world spaces. If the generated mesh matches a stored mesh, the XR system can retrieve the stored mesh (and any associated data, such as spatial anchor data and/or scene data) and render an XR experience relative to the stored mesh. If the generated mesh does not match a stored mesh, the XR system can establish the real-world space as a "new room" using the generated mesh and render the XR experience relative to the generated mesh. Thus, implementations described herein can reduce delay in rendering XR experiences, thereby improving latency and the overall user experience by minimizing or eliminating manual scene capture and setup for artificial reality.

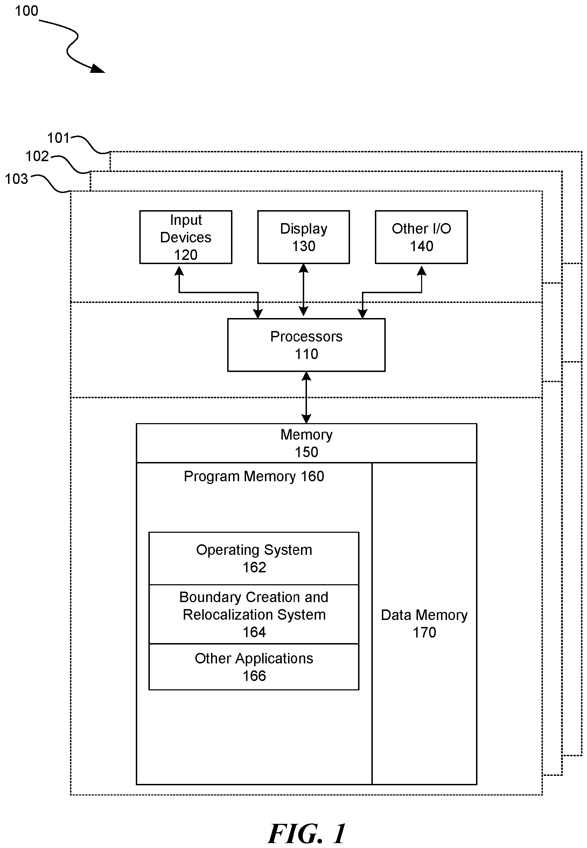

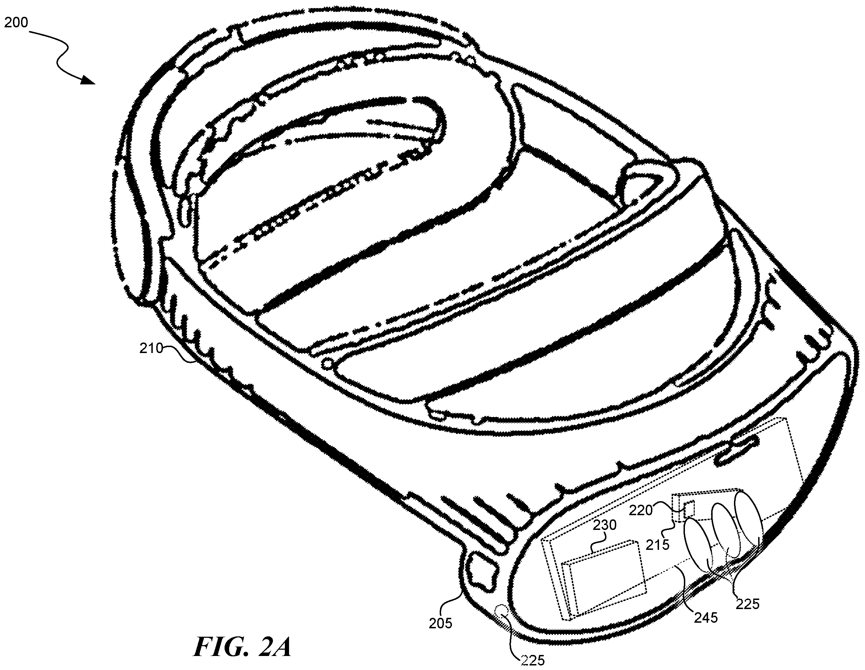

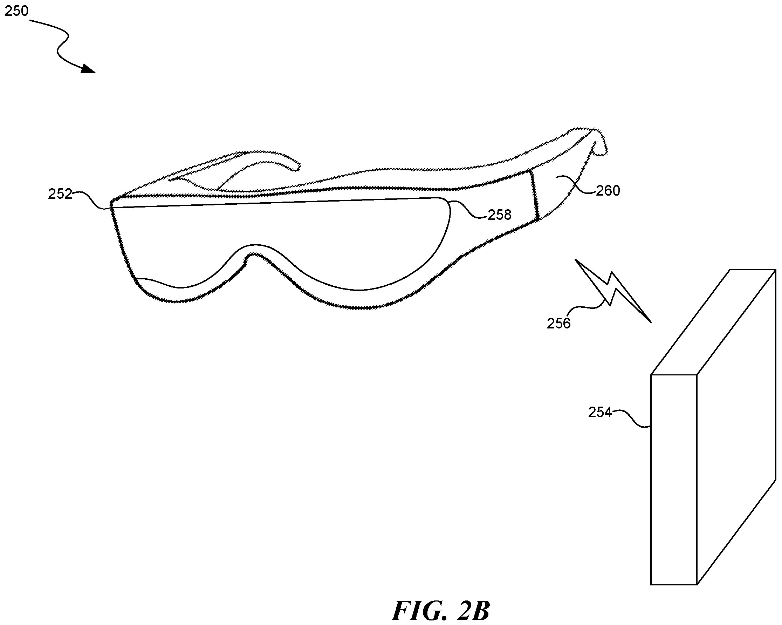

Several implementations are discussed below in more detail in reference to the figures. Figure 1 is a block diagram illustrating an overview of devices on which some implementations of the disclosed technology can operate. The devices can comprise hardware components of a computing system 100 that can automatically generate a boundary for a virtual reality (VR) experience and/or localize an artificial reality (XR) system in a real-world space. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, boundary creation and relocalization system 164, and other application programs 166. Memory 150 can also include data memory 170 that can include, e.g., rendering data, virtual object data, XR environment/experience data, mesh data, visual feature data, real-world space data, scan data, trigger data, boundary data, threshold data, spatial anchor data, scene data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

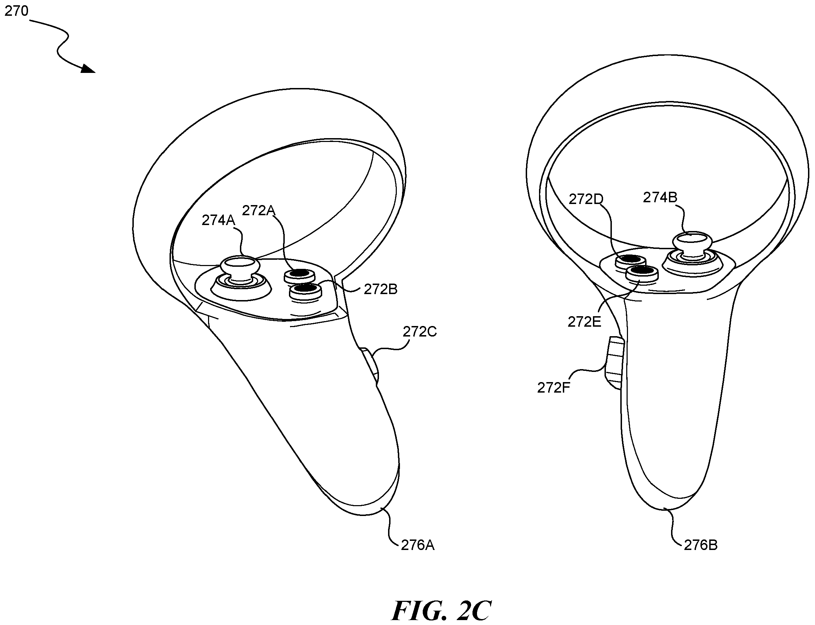

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

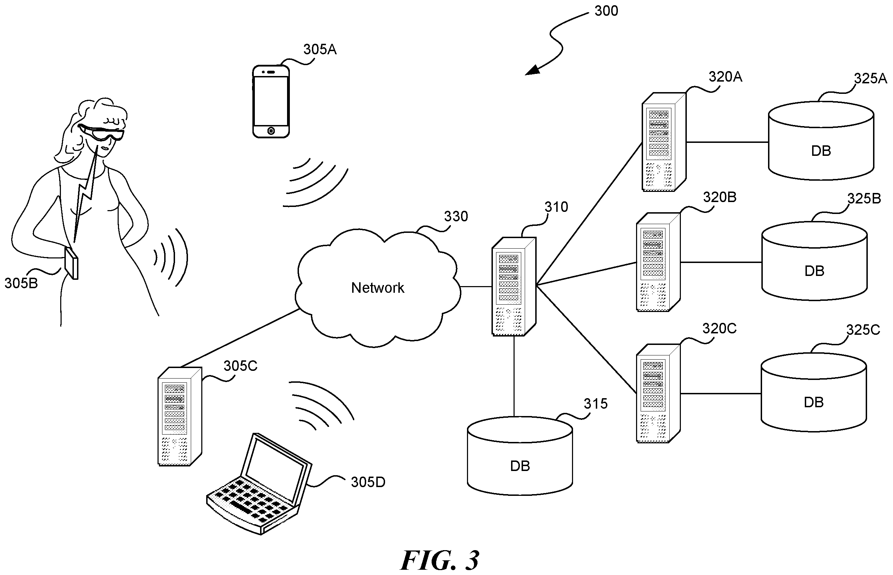

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

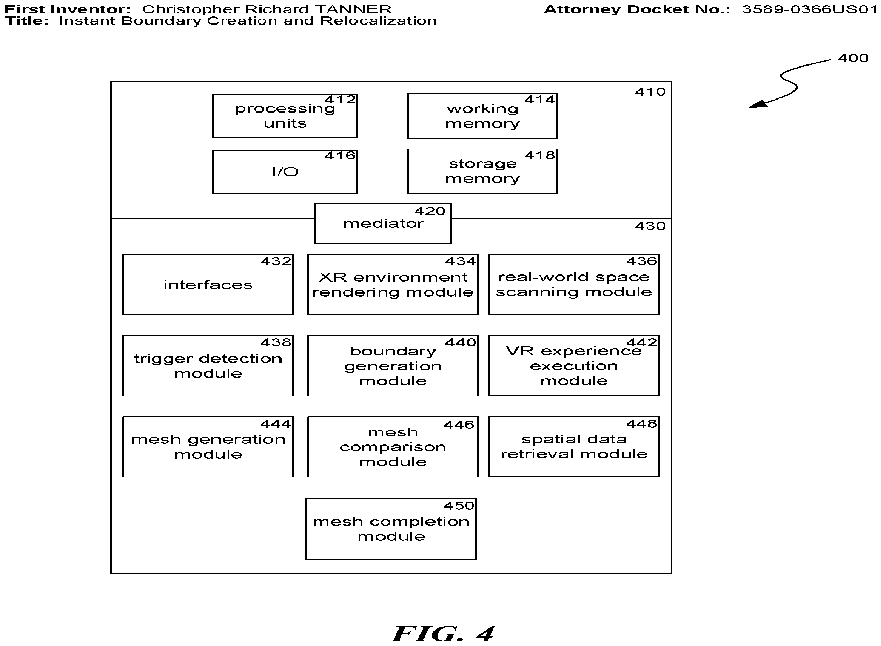

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for generating a boundary for a virtual reality (VR) experience and/or localizing an artificial reality (XR) system in a real-world space. Specialized components 430 can include XR environment rendering module 434, real-world space scanning module 436, trigger detection module 438, boundary generation module 440, VR experience execution module 442, mesh generation module 444, mesh comparison module 446, spatial data retrieval module 448, mesh completion module 450, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

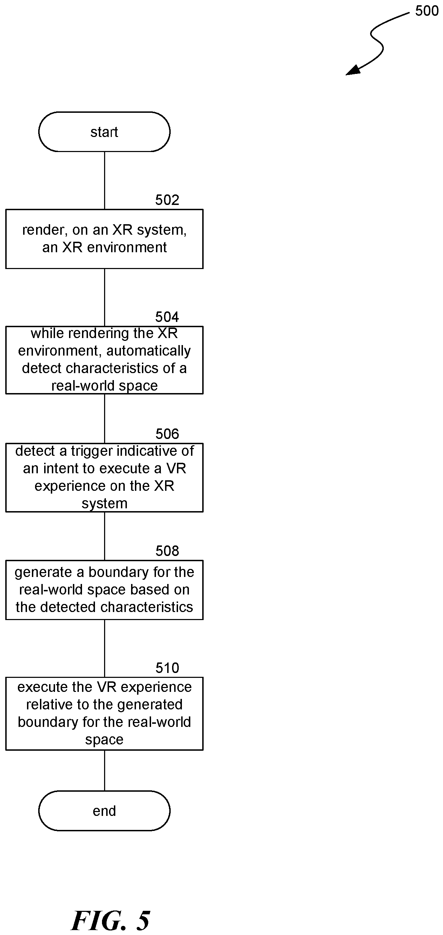

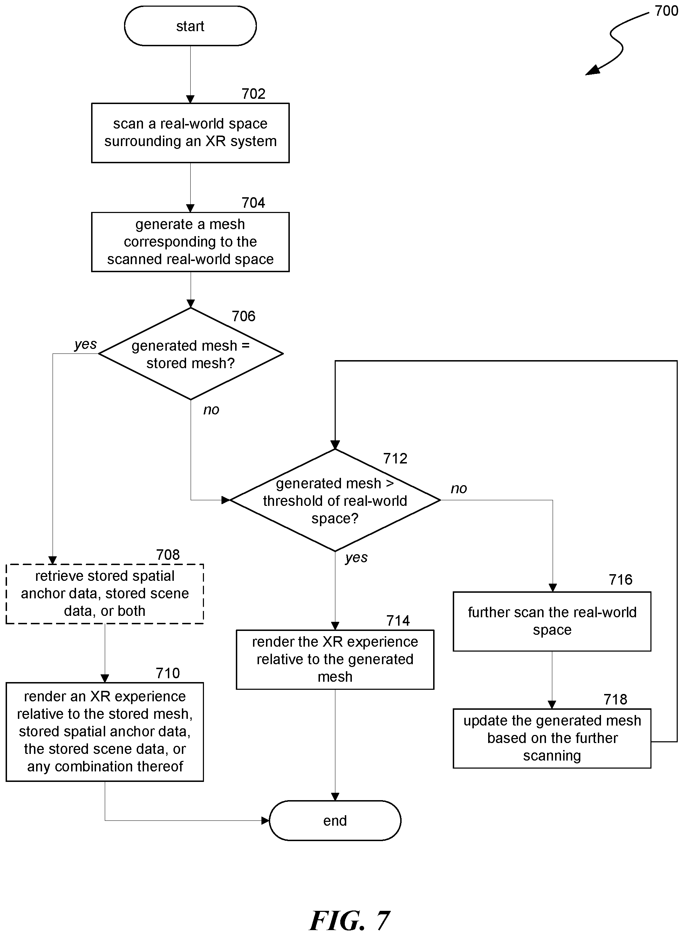

XR environment rendering module 434 can render an XR environment on an XR system. In some implementations, XR environment rendering module 434 can render one or more virtual objects overlaid on a view of a real-world space, such as in augmented reality (AR) or mixed reality (MR). In some implementations, XR environment rendering module 434 can render the XR environment relative to a boundary established for the real-world space, such as a mesh (described further herein), one or more spatial anchors, scene data, etc. Further details regarding rendering an XR environment are described herein with respect to block 502 of Figure 5, and blocks 710 and 714 of Figure 7.

Real-world space scanning module 436 can scan a real-world space, surrounding an XR system, to automatically detect characteristics of the real-world space. Real-world space scanning module 436 can scan the real-world space as the XR system is being moved, such as when a user of the XR system is traversing and/or looking around the real-world space. Real-world space scanning module 436 can scan the real-world space using, for example, one or more cameras, one or more depth sensors, or any combination thereof, which can be included in input/output devices 416. Further details regarding scanning a real-world space surrounding an XR system are described herein with respect to block 504 of Figure 5 and block 702 of Figure 7.

In some implementations, trigger detection module 438 can detect a trigger indicative of an intent to execute a VR experience on the XR system. In some implementations, the trigger can be a user-initiated, XR application-initiated, or system-initiated request to launch a VR experience. For example, the user can select a virtual button corresponding to launch of a VR experience from a virtual menu. In another example, an XR application can request to switch from an AR or MR mode into a VR mode. Further details regarding detecting a trigger indicative of an intent to execute a VR experience are described herein with respect to block 506 of Figure 5.

In some implementations, boundary generation module 440 can generate a boundary for the real-world space, scanned by real-world space scanning module 436, based on the detected characteristics of the scanned real-world space. In some implementations, the boundary can be a "guardian." As used herein, a "guardian" can be a defined XR usage space in a real-world environment. If a user, wearing an XR system, crosses the boundary when accessing an XR experience, one or more system actions or restrictions can be triggered on the XR system. For example, the XR system can display a warning message on the XR system, can activate at least partial pass-through on the XR system, can display the boundary on the XR system, can pause rendering of or updates to the XR environment, etc., as described further herein. In some implementations, the boundary can be a "mesh" of the real-world space. In such implementations, it is contemplated that boundary generation module 440 and mesh generation module 444 can perform similar functions, and one or the other can be omitted from specialized components 430. In some implementations, boundary generation module 440 can further update a generated boundary based on further scanning performed by real-world space scanning module 436, such as when it is determined that the generated boundary covers less than a threshold amount of the real-world space, as described further herein. Further details regarding generating a boundary for a real-world space are described herein with respect to block 508 of Figure 5.

In some implementations, VR experience execution module 442 can execute a VR experience, relative to the boundary generated by boundary generation module 440, for the real-world space. For example, VR experience execution module 442 can render the VR experience as a fully immersive, computer-generated artificial environment occupying the entire view of the XR system. However, if the user wearing the XR system approaches the generated boundary while rendering the VR experience, VR experience rendering module can, for example, cease rendering the VR experience, display the boundary overlaid on the VR experience, display a warning, etc., as described further above and herein.

In some implementations, mesh generation module 444 can generate a mesh corresponding to the real-world space scanned by real-world space scanning module 436. The mesh can be, for example, a three-dimensional (3D) model of the boundaries of the real-world space, including one or more walls, the ceiling, the floor, one or more physical objects, etc. In some implementations, mesh generation module 444 can generate the mesh using one or more cameras, one or more depth sensors, or any combination thereof, which can be included in input/output devices 416. In some implementations, however, it is contemplated that depth data need not be captured, and can instead be predicted from the one or more images, such as by a machine learning model. In some implementations, mesh generation module 444 can further perform post-processing on the mesh to refine and/or simplify the mesh, as described further herein. Further details regarding generating a mesh corresponding to a scanned real-world space are described herein with respect to block 508 of Figure 5 and block 704 of Figure 7.

In some implementations, mesh comparison module 446 can compare the mesh, generated by mesh generation module 444, to one or more stored meshes corresponding to one or more previously scanned real-world spaces, to determine if the generated mesh matches a stored mesh above a threshold. For example, mesh comparison module 446 can identify visual features in the generated mesh (e.g., corners, edges, curves, etc.), and attempt to align such visual features in the generated mesh with one or more stored meshes. In some implementations, mesh comparison module 446 can determine a percentage of the generated mesh that matches a stored mesh, e.g., 75% similarity, and determine that the meshes match if a threshold percentage is met. In some implementations, mesh comparison module 446 can select the threshold by taking into account dynamic and/or moveable objects that may be present in the real-world space. For example, in some implementations, mesh comparison module 446 can identify stationary components of the real-world space, such as walls, the floor, the ceiling, large furniture, etc., and determine whether the mesh meets the threshold based only on those components. Further details regarding comparing a generated mesh to one or more stored meshes are described herein with respect to block 706 of Figure 7.

In some implementations, spatial data retrieval module 448 can retrieve stored spatial anchor data, stored scene data, or both, corresponding to a stored mesh, when mesh comparison module 446 determines that the generated mesh matches the stored mesh above a threshold. In some implementations, the stored mesh can have one or more spatial anchors associated therewith. As used herein, a "spatial anchor" can be a designated, persistent location in a real-world space relative to which virtual objects can be persistently positioned, as defined further herein. As used herein, "scene data" can be labeled data for identified physical objects in a real-world space, e.g., table, chair, couch, etc., which can be captured in a mesh and associated with spatial anchors, as defined further herein. Further details regarding retrieving stored spatial anchor data, stored scene data, or both, for a real-world space corresponding to a stored mesh are described herein with respect to block 708 of Figure 7.

In some implementations, mesh completion module 450 can determine whether a generated mesh is complete, e.g., whether the mesh generated by mesh generation module 44 meets or exceeds a threshold. In some implementations, the threshold can be a percentage of a real-world space, e.g., 90% of the real-world space. In some implementations, the threshold can be defined by an XR application based on its requirements for rendering a particular XR experience, e.g., all four walls, ceiling, floor, etc. If the generated mesh is sufficiently complete, mesh completion module 450 can instruct XR environment rendering module 434 to render the XR environment relative to the generated mesh. If the generated mesh is not sufficiently complete, mesh completion module 450 can instruct real-world space scanning module 436 to further scan the real-world space, mesh generation module 444 can update the generated mesh, and mesh completion module 450 can again determine if the mesh is sufficiently complete. Further details regarding determining whether a generated mesh is complete are described herein with respect to block 712 of Figure 7.

Although described herein as specialized components 430 including all of XR environment rendering module 434, real-world space scanning module 436, trigger detection module 438, boundary generation module 440, VR experience execution module 442, mesh generation module 444, mesh comparison module 446, spatial data retrieval module 448, and mesh completion module 450, in some implementations, it is contemplated that one or more of such modules can be omitted. For example, as described above, when boundary generation module 440 generates a mesh, it is contemplated that boundary generation module 440 and mesh generation module 444 can be combined. In addition, in order to perform only process 500 of Figure 5, it is contemplated that specialized components 430 need only include XR environment rendering module 434, real-world space scanning module 436, trigger detection module 438, boundary generation module 440, and VR experience execution module 442, with the other modules being omitted. In order to perform only process 700 of Figure 7, it is contemplated that specialized components 430 need only include real-world space scanning module 436, mesh generation module 444, mesh comparison module 446, mesh completion module 450, and XR environment rendering module 434, with the remaining modules being omitted. Further, it is noted that when executing process 700 of Figure 7, specialized components 430 can optionally include spatial data retrieval module 448.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for generating a boundary for a virtual reality (VR) experience. In some implementations, process 500 can be performed while an artificial reality (XR) environment is being rendered, such as a mixed reality (MR) or augmented reality (AR) environment. Process 500 can render the XR environment based on, for example, a user request, an application-level request, and/or a system-level request. In some implementations, process 500 can render the XR environment automatically, such as upon activation or donning of an XR system, which, in some implementations, can pick up where the user left off in the XR environment in a previous session.

In some implementations, process 500 can be performed by an XR system including one or more XR devices, such as an XR head-mounted display (HMD) (e.g., XR HMD 200 of Figure 2A and/or XR HMD 252 of Figure 2B), one or more external processing components, one or more controllers (e.g., controllers 276A and/or 276B of Figure 2C), etc. In some implementations, the XR system can be capable of rendering AR experiences and/or MR experiences, in addition to VR experiences. In some implementations, one or more blocks of process 500 can be performed by a server or computing system remote from the XR system, such as a cloud computing system or edge computing system associated with a platform of the XR system.

At block 502, process 500 can render, on an XR system, an XR environment. In some implementations, the XR environment can be an AR or MR environment. In some implementations, the rendered XR environment can include one or more virtual objects overlaid on a view of a real-world space surrounding the XR system. However, it is contemplated that in some implementations, the view on the XR system need not always include virtual objects overlaid onto the real-world space while in AR or MR mode, and can simply show a pass-through view of the real-world space.

At block 504, while rendering the XR environment, process 500 can automatically detect characteristics of the real-world space by scanning the real-world space, as the XR system is moved. In some implementations, process 500 can scan the real-world space "in the background," e.g., without notifying a user of the XR system that it is scanning the real-world space, and/or without instruction or explicit input from the user to scan the real-world space. In other words, in some implementations, process 500 can scan the real-world space based on an automatically generated system-level command. In some implementations, such as when an XR application is capable of rendering AR or MR experiences, as well as VR experiences, the XR application can generate a command to scan the real-world space, such as through an application programming interface (API) call to the system.

Process 500 can scan the real-world space via one or more image capture devices (e.g., cameras detecting light in visible and/or invisible wavelength ranges) one or more depth sensors, or any combination thereof. In some implementations, process 500 can scan the real-world space using one or more cameras, without the use of depth sensors, capturing one or more two-dimensional (2D) images of the real-world space without corresponding depth data, which can later be predicted from features of the 2D images by applying one or more machine learning models. Further details regarding locally applying and updating a trained model for generating depth predictions for 2D images are described further in U.S. Pat. App. No. 18/454,349 (Attorney Docket No. 3589-0286US01), filed August 23, 2023, entitled "Assisted Scene Capture for an Artificial Reality Environment," which is herein incorporated by reference in its entirety.

In some implementations, the characteristics of the real-world space can include visual features of the real-world space, such as walls, the ceiling, the floor, physical objects within the real-world space, etc. In some implementations, the characteristics of the real-world space can be captured as an XR space model (also referred to as a "room box") corresponding to the real-world space, which can comprise at least one of an XR wall corresponding to the physical wall, an XR ceiling corresponding to the physical ceiling, an XR floor corresponding to the physical floor, or any combination thereof. To obtain the XR space model, the user of the XR system can scan the real-world space using one or more cameras and/or one or more depth sensors by moving and/or looking around the real-world space with the XR device, with process 500 automatically identifying one or more flat surfaces (e.g., walls, floor, ceiling) in the real-world space using such image and/or depth data. For example, process 500 can identify the flat surfaces by analyzing the image and/or depth data for large areas of the same color, of consistently increasing and/or decreasing depth relative to the XR system, and/or of particular orientations (e.g., above, below, or around the XR system), etc.

In some implementations, the characteristics of the real-world space can be captured as a three-dimensional (3D) mesh, corresponding to the scanned real-world space, and stored on the XR system until if or when it is needed to render a VR experience. In some implementations, the mesh can be stored as a grid of one or more interconnected shapes (e.g., squares, triangles, etc.). In some implementations, process 500 can capture both an XR space model and a mesh in order to further refine the mesh, as described further herein. In some implementations, while running in the background and capturing the XR space model and/or mesh, process 500 need not display the XR space model and/or mesh on the XR system, either while it is being captured and/or when capturing is complete.

At block 506, process 500 can detect a trigger indicative of an intent to execute a VR experience on the XR system. In some implementations, the trigger can be a request to launch the VR experience by the user of the XR system, such as via selection of a virtual or physical button corresponding to the VR experience via a hand gesture, controller selection, audible announcement, and/or eye gaze dwell. In some implementations, the trigger can be a request to launch the VR experience by an XR application rendering the XR environment, such as when the XR application has an MR or AR mode in addition to a VR mode.

In some implementations, based on detecting the trigger at block 506, process 500 can determine whether the XR system can be relocalized in the real-world space. In some implementations, process 500 can attempt to relocalize the XR system in the real-world space by comparing one or more detected characteristics of the real-world space to one or more stored characteristics of previously captured, known real-world spaces. If process 500 determines that the characteristics of the scanned real-world space match characteristics of a stored real-world space above a threshold, process 500 can bypass block 508 and continue to block 510, thereby executing the VR experience relative to a stored boundary corresponding to the known real-world space. If process 500 determines that the characteristics of the scanned real-world space do not match the characteristics of a stored real-world space above the threshold (e.g., indicating that relocalization has failed because the real-world space is new to the XR system and/or otherwise cannot be recognized), process 500 can continue to block 508. Further details regarding localization and/or relocalization of an XR system in a real-world space are described herein with respect to Figure 7.

At block 508, process 500 can, in response to the trigger detected at block 506, generate a boundary for the real-world space based on the detected characteristics of the real-world space. In some implementations, the boundary can correspond to the generated XR space model and/or mesh. In some implementations in which a mesh corresponding to the real-world space is captured, process 500 can further process the generated mesh. For example, in some implementations, processing the displayed mesh can include collapsing one or more variations in the mesh corresponding to an identified flat surface (e.g., a wall, a ceiling, a floor, or any combination thereof), onto a plane created by the identified flat surface. For example, when scanning the real-world space, process 500 may incorrectly detect minor discrepancies in the depth of the walls, ceiling, and/or floor, causing the mesh to not lay flat on the surface. In such examples, process 500 can collapse the mesh onto the corresponding flat surface, such that the mesh lays flat without the minor variations in depth. In some implementations, process 500 can identify the corresponding flat surfaces from a generated XR space model.

In some implementations, processing the generated mesh can include clipping the mesh where the mesh extends through, beyond, and/or around physical objects, that do not correspond to the real-world space intended to be captured. For example, when scanning the real-world space, process 500 may detect depths beyond windows, sliding glass doors, open doorways, and/or other see-through elements of a real-world space. In such examples, process 500 can modify the mesh, such that the mesh does not extend into such areas. In some implementations, process 500 can clip such areas from the mesh by clipping the mesh onto a generated XR space model, when captured as described above.

In some implementations, processing the generated mesh can include simplifying the mesh corresponding to an identified flat surface (e.g., a wall, a ceiling, a floor, or any combination thereof). For example, because the surfaces are flat, a denser, higher definition mesh may not be necessary as fewer details are included on such surfaces. Thus, in such examples, process 500 can simplify the mesh by merging the mesh corresponding to the flat surfaces (e.g., merge 2 triangles into one square, merge all shapes corresponding to a flat surface into a rectangle, etc.). In some implementations, the flat surfaces can be identified from a generated XR space model, when captured as described above.

In some implementations, the processing can further include determining that at least one of one or more physical objects captured by the mesh is dynamic. Process 500 can determine that a physical object is dynamic by, for example, analyzing image data and/or depth data captured by the XR system to determine that the physical object is moving. In another example, process 500 can determine that a physical object is dynamic by performing object recognition on image data captured by the XR system (e.g., identifying a human, an animal, etc.). In such implementations in which process 500 determines that a physical object is dynamic, process 500 can filter the at least one of the one or more physical objects out of the mesh. For example, process 500 can remove the identified physical objects from the mesh.

In some implementations, processing the generated mesh can include determining that the mesh is complete by identifying that a threshold percentage of the real-world space is covered by the mesh, and/or that a threshold percentage of the real-world space has been scanned that is required for a VR experience to be rendered. For example, process 500 can compare the scanned portion of the real-world space to an amount of the real-world space needed to render a VR experience, to determine how much of the real-world space has been scanned and whether it exceeds a threshold, e.g., 90%. In some implementations, the threshold can be a threshold amount of or number of required surfaces (e.g., the floor, the ceiling, one or more walls). In some implementations, process 500 can determine a percentage of the real-world space scanned based on movement of the XR system relative to the real-world space (e.g., whether the user has looked around 360 degrees, whether the user has looked up and down from a number of angles, etc.). When above the threshold, process 500 can determine that the mesh is sufficiently complete and stop scanning the real-world space while rendering the XR environment.

In some implementations, process 500 can display a prompt to the user of the XR system indicating that the mesh is complete and available for usage in rendering a VR experience. However, in some implementations, such a prompt is not displayed, such that the user remains unaware that the XR system is scanning the real-world space in the background while the XR environment is being rendered. Further details regarding generating and processing a mesh corresponding to a real-world space are described in U.S. Pat. App. No. 18/454,349 (Attorney Docket No. 3589-0286US01), filed August 23, 2023, entitled "Assisted Scene Capture for an Artificial Reality Environment," which is herein incorporated by reference in its entirety.

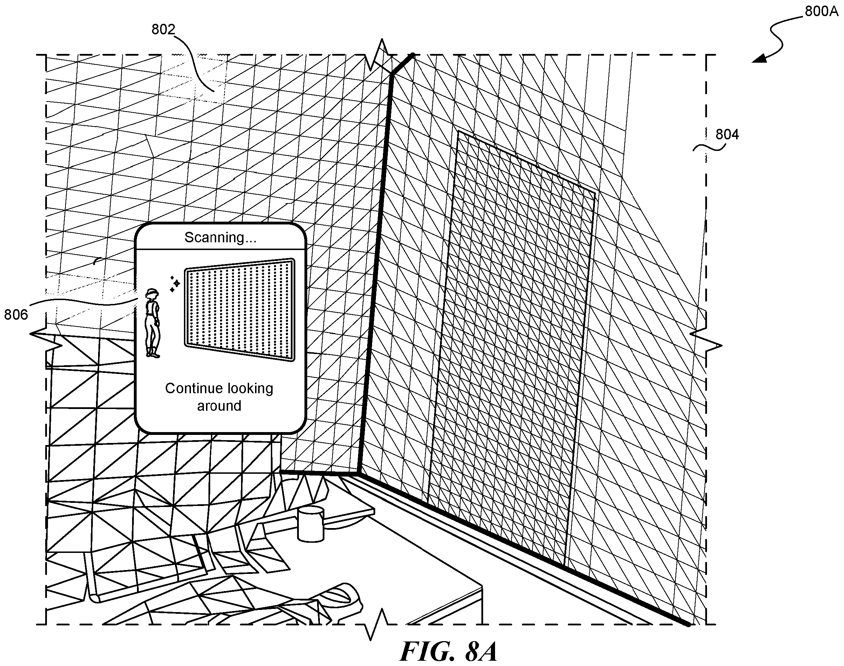

In some implementations, process 500 can determine that the generated boundary covers less than a threshold percentage of the real-world space. In such implementations, process 500 can further scan the real-world space while the XR system is moving. In some implementations, process 500 can prompt the user of the XR system to continue scanning the real-world space, e.g., through a visual or audible message. In some implementations, process 500 can direct the user where to further scan the real-world space, such as where insufficient scanning has been performed to generate the boundary, thereby obtaining additional characteristics of the real-world space. In some implementations, process 500 can display the generated boundary, which may be indicative of where further scanning of the real-world space is required, and instruct the user to continue scanning, such as is shown and described with respect to Figure 8A. Based on the further scanning, process 500 can update the generated boundary.

In some implementations, prior to executing the VR experience relative to the generated boundary, process 500 can determine an interaction mode for the VR experience based on the generated boundary. In some implementations, the interaction mode can be "moveable," e.g., such as when process 500 detects greater than a threshold amount of movement of the XR system. Process 500 can detect movement of the XR system via, for example, one or more images captured by the XR system over time (e.g., from an XR HMD and/or an external image capture device), one or more sensors of an inertial measurement unit (IMU) integral with the XR system, etc. For example, process 500 can detect that the user is not fixed to a particular pivot point in the XR environment, e.g., is moving greater than a threshold amount in the x-, y-, and/or z-directions. Alternatively or additionally, process 500 can determine a "moveable" interaction mode based on completion of the generated boundary above a threshold, as described further above. In the "moveable" interaction mode, the user can freely move about the real-world space while rendering the VR experience.

In some implementations, the interaction mode can be "stationary," e.g., such as when process 500 detects less than a threshold amount of movement of the XR system. For example, process 500 can detect that the user is fixed to a particular pivot point in the XR environment, thereby indicating the user is in a seated or standing posture, e.g., is moving less than a threshold amount in the x-, y-, and/or z-directions, as detected from one or more images, one or more sensors of an IMU, etc. In some implementations, process 500 can alternatively or additionally detect a seated or standing posture by analyzing one or more images, e.g., by capturing and detecting the user's legs in a seated or standing posture. Alternatively or additionally, process 500 can determine a "stationary" interaction mode based on completion of the generated boundary below a threshold, as described further above, as a boundary insufficient for a "moveable" interaction mode is more likely to be sufficient for a "stationary" interaction mode. In the "stationary" interaction mode, the user must remain fixed to the pivot point, and/or only move a threshold amount from the pivot point.

In some implementations, process 500 can recommend and/or notify the user of the determined interaction mode via the XR system, such as via display of a prompt and/or an audible announcement, although in some implementations, such recommendation and/or notification is not necessary. In some implementations, process 500 can modify the determined interaction mode based on input by the user received via the XR system. For example, the user can request that the VR experience be executed in "moveable" mode instead of "stationary" mode. In such implementations, if the generated boundary is not sufficiently complete to support a "moveable" mode in the VR experience, process 500 can continue to scan the real-world space, and/or prompt the user to continue scanning the real-world space, by moving the XR system and/or looking around the real-world space. In some implementations, while processing and/or generating the boundary, determining an interaction mode, and/or recommending the interaction mode, process 500 can continue to scan the real-world space in the background, and continually update and refine the generated boundary without prompting the user and/or without explicit instruction by the user to do so.

In some implementations, at any point in process 500, process 500 can display the detected characteristics of the real-world space and/or the generated boundary on the XR system. In some implementations, as noted above, displaying the generated boundary may indicate to the user where additional scanning may be needed to execute the VR experience. In some implementations, after displaying the generated boundary, process 500 can modify the generated boundary. For example, process 500 can receive input by the user of the XR system to make one or more manual adjustments to the generated boundary, at least in part, via detected positions of one or more controllers (e.g., controller 276A and/or controller 276B of Figure 2C) and/or tracked hand or other body part positions. For example, the user of the XR system can move the controllers or body parts around the real-world space to, for example, outline a correct position of the walls, ceiling, and/or floor with a ray projected from a controller. In another example, the user of the XR system can set the controller or body parts on the correct position of the walls, ceiling, and/or floor to identify them based on the position of the controller or body part (e.g., as detected by one or more cameras on the XR device, as detected via one or more sensors of an IMU, etc.). In some implementations, the user of the XR system can pinch (with a hand) or select (with a controller) a predicted wall, ceiling, and/or floor, and drag the wall, ceiling, and/or floor to the correct position. Further details regarding capturing and realigning a generated boundary are described in U.S. Pat. App. No. 18/346,379, filed July 3, 2023, entitled "Artificial Reality Room Capture Realignment," which is herein incorporated by reference in its entirety.

At block 510, process 500 can execute the VR experience relative to the generated boundary for the real-world space. For example, process 500 can execute the VR experience in either the "moveable" or "stationary" mode, as recommended and/or modified by the user of the XR system. In some implementations, as the user approaches the generated boundary (e.g., comes within a threshold distance and/or moves toward the generated boundary while a threshold amount of velocity) in the real-world space while executing the VR experience, process 500 can display a warning, audibly announce a warning, turn on pass-through, display at least a part of the generated boundary overlaid on the VR experience, or any combination thereof, thereby preventing potential injury to the user (or other users or moveable objects in the real-world space), damage to physical objects in the real-world space, etc.

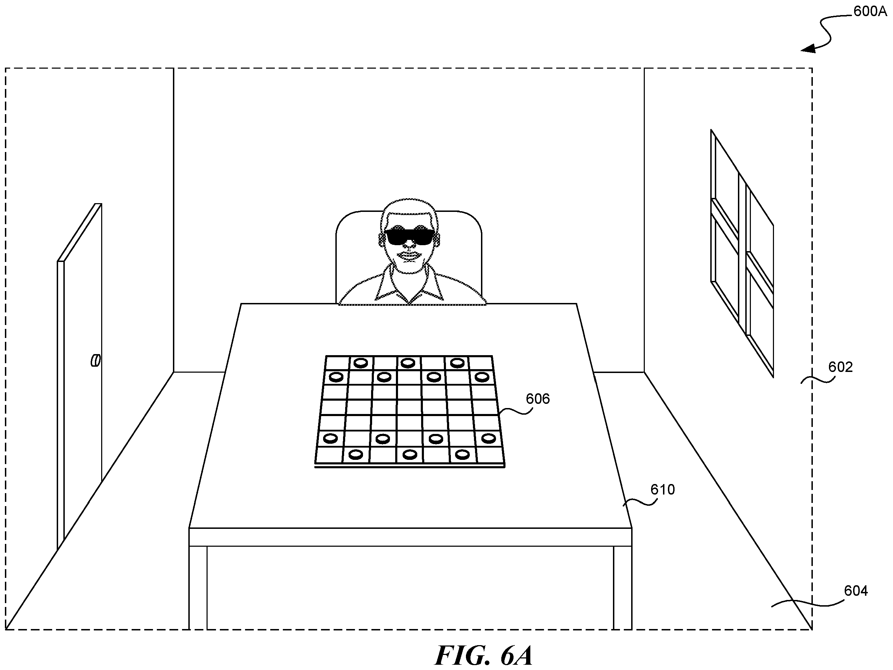

Figure 6A is a conceptual diagram illustrating an example view 600A, on an XR system, of an XR experience 604 rendered while scanning a real-world space 602 surrounding the XR system. XR experience 604 can be an augmented reality (AR) or mixed reality (MR) checkers game in which a virtual checkerboard 606 is overlaid onto physical table 610 in real-world space 602. While rendering XR experience 604, the XR system can scan real-world space 602 "in the background," i.e., without alerting the user of the XR system and without affecting XR experience 604, in order to generate, for example, boundary data that can be used to render a virtual reality (VR) experience.

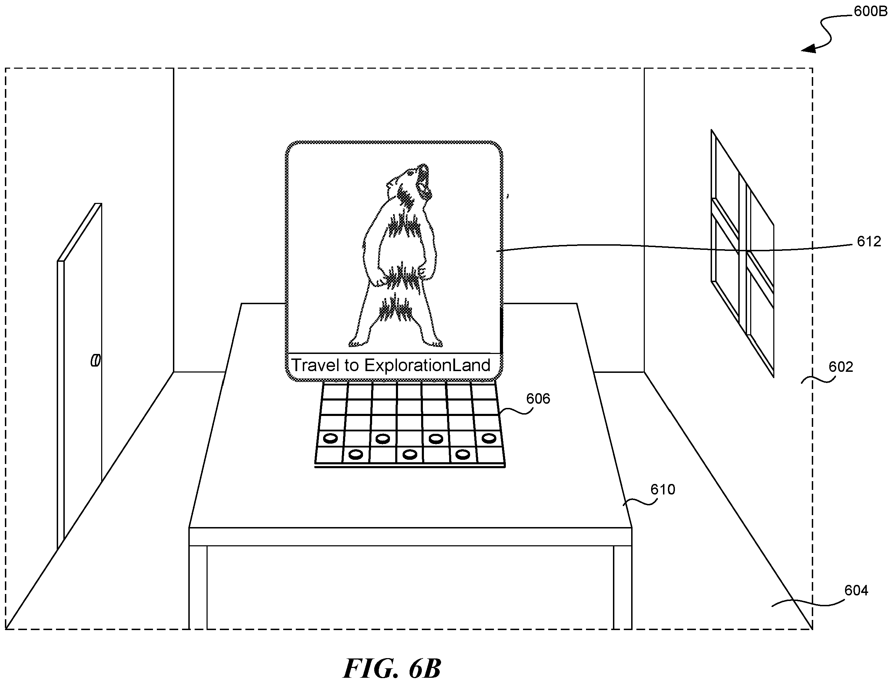

Figure 6B is a conceptual diagram illustrating an example view 600B, on an XR system, of an XR overlay 612 including an option to launch a VR experience. For example, based on a user selection from a menu, a user's audible announcement, and/or based on a system-level suggestion to the user, the XR system can render XR overlay 612 over XR experience 604. By selecting XR overlay 612, the user can indicate a desire to cease execution of XR experience 604, and instead travel to the VR experience indicated by XR overlay 612.

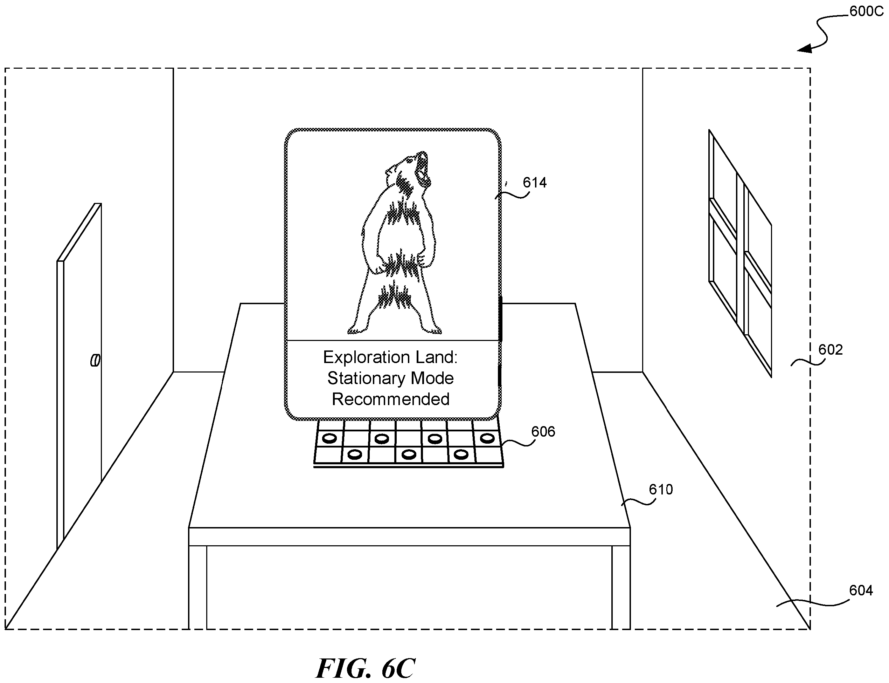

Figure 6C is a conceptual diagram illustrating an example view 600C, on an XR system, of a recommendation 614 for an interaction mode for a VR experience. From view 600B of Figure 6C, the user can select XR overlay 612 to launch a VR experience, which can be a trigger indicating an intent to enter VR mode. Upon detecting the intent to enter VR mode, the XR system can evaluate its scan of real-world space 602 and/or movement of the XR system in real-world space 602, to recommend either a "moveable" or "stationary" mode for the VR experience, as described further herein. In the example shown in views 600A-600C, the XR system can determine that the user is in a sitting posture in front of physical table 610, such as based on detection of less than a threshold amount of movement of the XR system in real-world space 602, and/or via detection of the user's legs being in a seated posture from one or more images (not shown). Thus, the XR system can recommend a "stationary" mode for the VR experience via XR overlay 612. In some implementations, however, the user can modify the suggested interaction mode to a "moveable" mode, as described further herein (not shown), which may require the user to further scan real-world space 602 with the XR system.

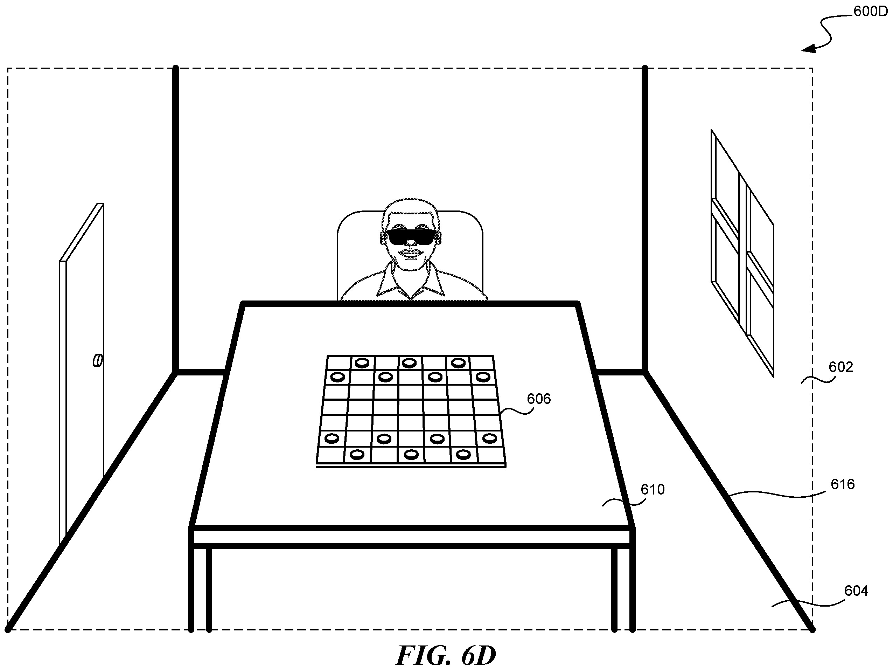

Figure 6D is a conceptual diagram illustrating an example view 600D, on an XR system, of a boundary 616 generated for a VR experience while rendering an XR experience. In this example, boundary 616 delineates the walls, floor, ceiling (not shown), and physical table 610 (e.g., a physical object) in real-world space 602, which were identified by scanning real-world space 602 with the XR system. In some implementations, the XR system can display boundary 616 so that the user of the XR system can make modifications, such as by clicking and dragging (e.g., with a controller) or pinching and dragging (e.g., with a hand gesture) boundary 616 to a correct or desired position, as described further herein.

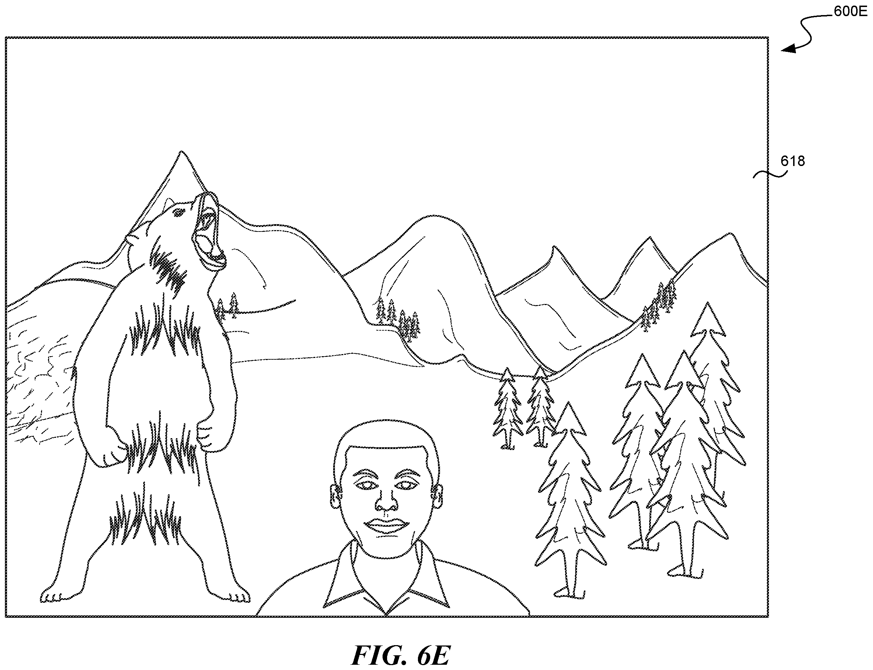

Figure 6E is a conceptual diagram illustrating an example view 600E, on an XR system, of a VR experience 618 rendered in relation to a boundary 616 generated by the XR system (shown in view 600D of Figure 6E). Once boundary 616 has been established for real-world space 602, the XR system can render VR experience 618, which can be a fully immersive, computer-generated view of an artificial environment. Because VR experience 618 can occupy the entire view of the user on the XR system, the generation of boundary 616 in real-world space 602 can ensure that the user does not strike or otherwise collide with physical objects in real-world space 602, thereby preventing injury and/or damage. In some implementations, if the user approaches boundary 616 in real-world space 602 while rendering VR experience 618, the XR system can render a warning, turn on passthrough, display boundary 616, and/or the like, as described further herein.

Figure 7 is a flow diagram illustrating a process 700 used in some implementations of the present technology for localizing an artificial reality (XR) system in a real-world space. In some implementations, process 700 can be performed upon activation or donning of the XR system in a real-world space. In some implementations, process 700 can be performed based on a user, application-level, or system-level request to launch an XR experience. In some implementations, process 700 can be performed upon entering a real-world space that is not recognized and/or is unknown by the XR system in an initial scan, thereby causing relocalization of the XR system in the real-world space to initially fail, and prompting scene creation, recovery, and/or recognition by process 700.

In some implementations, process 700 can be performed by an XR system including one or more XR devices, such as an XR head-mounted display (HMD) (e.g., XR HMD 200 of Figure 2A and/or XR HMD 252 of Figure 2B), one or more external processing components, one or more controllers (e.g., controllers 276A and/or 276B of Figure 2C), etc. In some implementations, one or more blocks of process 700 can be performed by a server or computing system remote from the XR system, such as a cloud computing system or edge computing system associated with a platform of the XR system.

At block 702, process 700 can scan a real-world space surrounding an artificial reality (XR) system, while moving the XR system (e.g., while a user of the XR system is moving around and/or looking around the real-world space). Process 700 can scan the real-world space using one or more cameras, one or more depth sensors, or any combination thereof. In some implementations, process 700 can scan the real-world space as described herein with respect to block 504 of Figure 5.

At block 704, process 700 can generate a mesh corresponding to the scanned real-world space. The mesh can include, for example, one or more walls, the floor, the ceiling, and/or one or more physical objects in the real-world space. In some implementations, process 700 can generate the mesh as described herein with respect to block 504 of Figure 5. An example view on an XR system of a mesh being generated for a real-world space, while scanning, is shown and described herein with respect to Figure 8A. In some implementations, process 700 can perform further processing of the generated mesh, such as is described herein with respect to block 508 of Figure 5. In some implementations, process 700 can generate the mesh in order to attempt to relocalize the XR system to the real-world space, if previously known to the XR system.

At block 706, process 700 can determine whether the generated mesh matches a stored mesh above a threshold. In some implementations, process 700 can access locally and/or remotely stored meshes corresponding to real-world spaces previously scanned by the XR system or other XR systems. Process 700 can determine whether the generated mesh matches a stored mesh above a threshold by, for example, attempting to align the generated mesh with stored meshes, and comparing one or more visual features of the generated mesh to one or more visual features of the stored meshes. For example, process 700 can determine whether a threshold number of visual features in the generated mesh match a threshold number of visual features in a stored mesh, whether the generated mesh matches a stored mesh within a threshold amount of variation, etc.

If process 700 determines that the mesh, generated at block 704, matches a stored mesh above a threshold at block 706, process 700 can proceed to blocks 708-710. In some implementations, at block 708, process 700 can retrieve stored spatial anchor data, stored scene data, or any combination thereof, associated with the stored mesh. The stored spatial anchor data can include one or more spatial anchors for the real-world space. Each of the one or more spatial anchors can define a respective location that can be automatically identified by the XR system. As XR systems are moved around real-world locations, they can scan those locations and define certain anchor points (e.g., at surfaces, edges, corners, doorways, etc.). These spatial anchors can define a map of the world around the XR system, and can be stored locally or to a centralized mapping service. By aligning one or more detected spatial anchors with corresponding stored spatial anchors, the XR system can identify itself within the map defined by the greater set of anchor points from the mapping service. Using this map, the XR system can then track itself in the real-world space and ensure that virtual objects appear to stay at the same position and orientation within the scene (i.e., are world-locked).

In some implementations, process 700 can retrieve the one or more spatial anchors from local storage on the XR system. In some implementations, process 700 can retrieve the one or more spatial anchors from a platform computing system or other server located on a cloud. In some implementations, the one or more spatial anchors can be previously established for the scene by another XR system that previously accessed the scene, and can be uploaded to the cloud for storage and later accessed by other XR systems later accessing the scene, e.g., the XR system performing process 700.

In some implementations, at least one of the one or more spatial anchors can be associated with scene data previously gathered by the XR system or another XR system. Upon accessing initially accessing the real-world space, an XR system can define scene data. In some cases, the XR system can define the scene data by capturing one or more images of the scene, e.g., with cameras integral with or in operable communication with the XR system and identify objects that have types matching types in a scene lexicon. In other implementations, a user can manually specify a location and a corresponding object type from the scene lexicon. Thus, the XR system can identify one or more object types (e.g., walls, doors, windows, table, chairs, etc.) of a set of object types defined as scene components, each object type corresponding to a physical object in the one or more images of the scene. The XR system can generate object data associated with the one or more physical objects having the one or more identified object types. The XR system can further generate scene data by storing the object data with reference to the one or more locations in the scene, and associate the scene data with at least one of the one or more spatial anchors.

At block 710, process 700 can render an XR experience relative to the stored mesh, and, in some implementations, relative to the stored spatial anchor data, the stored scene data, or any combination thereof. For example, process 700 can render virtual objects of a mixed reality (MR) or augmented reality (AR) experience in particular locations relative to any stored spatial anchors, and, in some implementations, in persistent locations relative to previous locations of the virtual objects in previously executed sessions of the XR experience. In some implementations, process 700 can render virtual objects relative to scene data, such as identified real-world objects in the real-world space. For example, process 700 can render a virtual vase of flowers on an identified physical kitchen island. In some implementations, process 700 can render virtual objects relative to the stored mesh. For example, process 700 can render virtual objects relative to and/or interacting with walls, the floor, the ceiling, and/or physical objects identified in the mesh, such as a virtual ball bouncing off of a physical table identified in the mesh. In some implementations, such as when the XR experience is a VR experience, process 700 can use the stored mesh as a boundary for the real-world space, and provide a warning or other safety measure if the user approaches or comes within a threshold distance of the boundary, as described further herein with respect to block 510 of Figure 5.

If process 700 determines, at block 706, that the generated mesh does not match a stored mesh above a threshold, process 700 can proceed to block 712. At this point, the XR system has scanned a sufficient amount of the real-world space for process 700 to determine that the XR system is not in a preexisting room. However, the XR system has scanned enough of the real-world space to establish (or begin to establish) a new room. Thus, at block 712, process 700 can determine whether the generated mesh has at least a threshold level of completion relative to the real-world space. For example, process 700 can determine if the generated mesh covers at least a threshold percentage of the real-world space, whether a threshold amount of number of particular physical objects of the real-world space are covered by the mesh (e.g., all of the walls, the floor, the ceiling, etc.) and/or the like. In some implementations, the threshold level of completion can be defined by the requirements of a particular XR experience.

If, at block 712, process 700 determines that the generated mesh covers more than a threshold amount of the real-world space, process 700 can proceed to block 714. At block 714, process 700 can render the XR experience relative to the generated mesh, such as by rendering virtual objects relative to the stored mesh. For example, process 700 can render virtual objects relative to and/or interacting with walls, the floor, the ceiling, and/or physical objects identified in the mesh, such as a virtual ball bouncing off of a physical table detected in the mesh. In some implementations, such as when the XR experience is a VR experience, process 700 can use the stored mesh as a boundary for the real-world space, and provide a warning or other safety measure if the user approaches or comes within a threshold distance of the boundary, as described further herein with respect to block 510 of Figure 5. In some implementations, it is contemplated that, while blocks 706 and/or 712 are being performed, process 700 can continue to scan the real-world space, and gather mesh data and/or spatial anchor data for the real-world space that can be used to render the XR experience at block 714.

If, at block 712, process 700 determines that the generated mesh does not cover more than a threshold amount of the real-world space, process 700 can proceed to blocks 716-718. At block 716, process 700 can further scan the real-world space as the XR system moves in the real-world space (e.g., by the user looking around and/or moving around the real-world space). In some implementations, process 700 can prompt the user, via the XR system, to continue looking and/or moving around the real-world space, such as is shown in Figure 8A. In some implementations, process 700 can display the generated mesh to the user, overlaid onto a view of the real-world space, in order to indicate to the user the area(s) of the real-world space that need to be scanned, as described further herein.

At block 718, process 700 can update the generated mesh based on the further scanning. Process 700 can then return to block 712, and again determine whether the updated mesh covers more than a threshold amount of the real-world space. If the updated mesh does not cover more than a threshold amount of the real-world space, process 700 can return to block 716 and continue scanning the real-world space, and so on and so forth. If the updated mesh covers more than a threshold amount of the real-world space, process 700 can proceed to block 714, and render the XR experience relative to the generated mesh, as described further above.

Although described primarily herein as generating and comparing meshes to determine if a matching stored mesh already exists at blocks 704-706, it is contemplated that, in some implementations, process 700 can alternatively identify visual features of the real-world space (e.g., using computer vision techniques), and compare such visual features to features of stored meshes, in order to determine if a preexisting mesh exists. In such implementations, if a match exists based on the visual features, process 700 can render the XR experience relative to the stored mesh at block 710. If a match does not exist based on the visual features, it is contemplated that process 700 can then generate the mesh (as described with respect to block 704), bypass block 706, and continue to block 712, and so on.

Figure 8A is a conceptual diagram illustrating an example view 800A, on an XR system, of a mesh 802 being generated as the XR system scans a real-world space 804. While the XR device is scanning real-world space 804, the XR device can display an XR overlay 806 prompting the user to continue moving about real-world space 804, and/or to continue looking around real-world space 804, in order to generate mesh 802. In some implementations, the XR device can post-process mesh 802 upon completion, e.g., when a threshold amount of real-world space 804 has been covered by mesh 802, and/or when mesh 802 is sufficient to render an XR experience, as defined by a particular XR application. In some implementations, the XR system can render view 800A while initially attempting to match mesh 802 to a stored mesh and/or in order to obtain additional mesh data for rendering an XR environment.

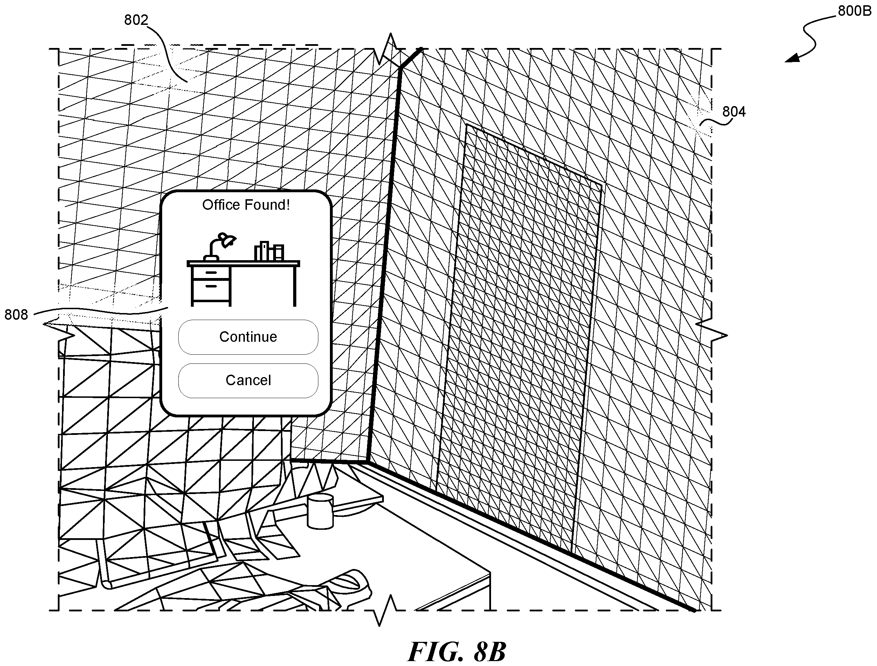

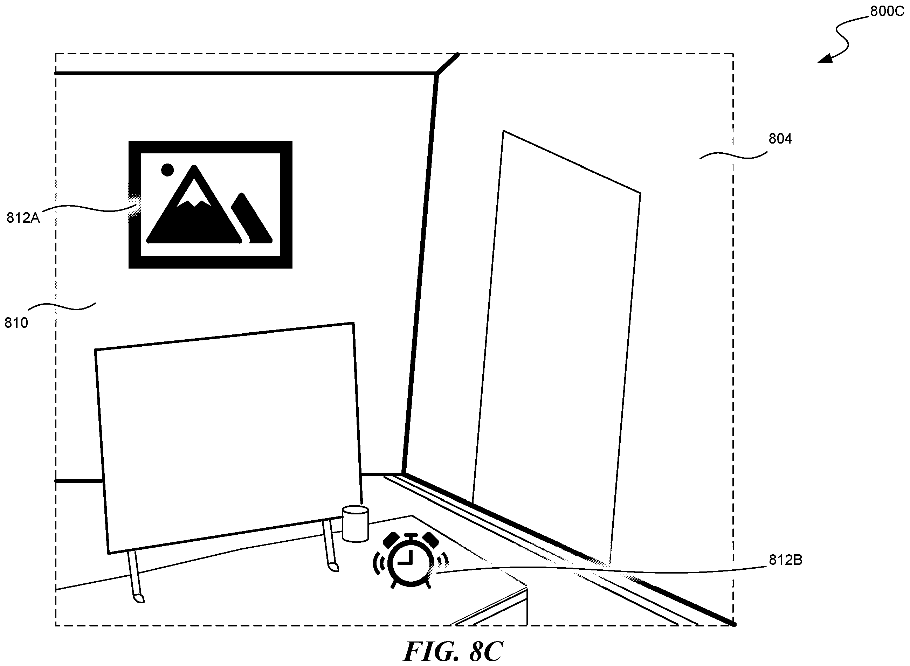

Figure 8B is a conceptual diagram illustrating an example view 800B, on an XR system, of a completed mesh 802 of a real-world space 804 in which the XR system has localized or relocalized. In some implementations, upon the XR system matching a threshold number of visual features of mesh 802 to a stored mesh, the XR system can obtain the stored mesh, and relocalize into real-world space 804. In some implementations, when XR system cannot relocalize by matching mesh 802 to a stored mesh, the XR system can establish real-world space 804 as a new room having mesh 802. In either case, the XR system can display view 800B, indicating that the XR system has either relocalized or localized into the room (e.g., an office) via XR overlay 808, and can allow the user to select whether to continue an XR experience in real-world space 804, or to cancel. In some implementations, however, it is contemplated that the XR system need not display XR overlay 808, and can automatically continue into XR experience 810, shown in Figure 8C.

Figure 8C is a conceptual diagram illustrating an example view 800C, on an XR system, of an XR experience 810 being rendered relative to a relocalized or localized real-world space 804. Upon selection by the user of the XR system to continue the XR experience in real-world space 804 (or upon automatic execution of the XR experience upon relocalization or localization of the XR system), the XR system can render XR experience 810, shown in view 800C. For example, the XR system can render virtual objects 812A-812B relative to physical objects in real-world space 804 identified by mesh 802. For example, the XR system can render virtual art 812A hanging on a physical wall identified by the mesh and/or any available scene data, and virtual clock 812B on a physical tabletop identified by the mesh and/or any available scene data.

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for automatically generating a boundary for a virtual reality experience, the method comprising:
rendering, on an artificial reality system of a user, an artificial reality environment, the artificial reality environment including one or more virtual objects overlaid on a view of a real-world space;
while rendering the artificial reality environment, automatically detecting characteristics of the real-world space by scanning the real-world space as the artificial reality system is moved;
detecting a trigger indicative of an intent to execute the virtual reality experience on the artificial reality system;
in response to the detected trigger, generating a boundary for the real-world space based on the detected characteristics of the scanned real-world space;
determining that the generated boundary covers less than a threshold percentage of the real-world space;
based on the determining that the generated boundary covers less than the threshold percentage of the real-world space, further scanning the real-world space by the artificial reality system;
updating the generated boundary, based on the further scanning of the real-world space; and
executing the virtual reality experience relative to the generated boundary for the real-world space.

2. The method of claim 1,
wherein the further scanning the real-world space is in response to a prompt, rendered by the artificial reality system, to make further movement of the artificial reality system, and
wherein the method further comprises:
obtaining additional characteristics of the real-world space in response to the further movement of the artificial reality system.

3. The method of claim 1 or claim 2, further comprising
prior to executing the virtual reality experience, determining an interaction mode for the virtual reality experience based on the generated boundary, the interaction mode being based on either A) detecting greater than a threshold amount of movement, of the artificial reality system, while scanning the real-world space, or B) detecting a seated or standing posture of the user having less than the threshold amount of movement;
and optionally wherein the determined interaction mode is modifiable by the user via the artificial reality system.

4. The method of any preceding claim, wherein the method further comprises:
modifying the generated boundary based on one or more manual adjustments made by the user.

5. The method of any preceding claim, wherein the detected trigger is a launch of the virtual reality experience on the artificial reality system.

6. The method of any preceding claim, wherein scanning the real-world space includes generating a mesh corresponding to the real-world space, and wherein generating the boundary includes:
processing the mesh, the processing including at least one of:
collapsing one or more variations in the mesh corresponding to at least one of a wall, a ceiling, a floor, or any combination thereof, onto a detected flat surface,
clipping the mesh to the artificial reality space model where the mesh extends beyond the detected flat surface,
simplifying the mesh corresponding to the at least one flat surface,
determining that the mesh is complete by identifying that a threshold percentage of the real-world space is covered by the mesh, or
any combination thereof.

7. The method of any preceding claim, wherein the artificial reality system scans the real-world space using at least one of one or more cameras, one or more depth sensors, or any combination thereof.

8. The method of any preceding claim,
wherein the boundary is generated by estimating depth data for the scanned real-world space, and
wherein the depth data is estimated by applying a machine learning model to one or more images of the scanned real-world space.

9. The method of any preceding claim, further comprising:
based on the detected trigger, and prior to generating the boundary, determining that relocalization, of the artificial reality system in the real-world space, failed;
and/ or further comprising, prior to executing the virtual reality experience, displaying the generated boundary on the artificial reality system;
and/ or wherein the real-world space is scanned without notifying the user via the artificial reality system.

10. A computer-readable storage medium storing instructions that, when executed by a computing system, cause the computing system to perform a process for automatically generating a boundary for a virtual reality experience, the process comprising:
rendering, on an artificial reality system of a user, an artificial reality environment, the artificial reality environment including one or more virtual objects overlaid on a view of a real-world space;
while rendering the artificial reality environment, automatically detecting characteristics of the real-world space by scanning the real-world space, as the artificial reality system is moved, optionally without notifying a user of the artificial reality system;
detecting a trigger indicative of an intent to execute the virtual reality experience on the artificial reality system;
in response to the detected trigger, generating a boundary for the real-world space based on the detected characteristics of the scanned real-world space; and
executing the virtual reality experience relative to the generated boundary for the real-world space.

11. The computer-readable storage medium of claim 10, wherein the process further comprises:
determining that the generated boundary covers less than a threshold percentage of the real-world space;
based on the determining that the generated boundary covers less than the threshold percentage of the real-world space, further scanning the real-world space by the artificial reality system; and
updating the generated boundary, based on the further scanning of the real-world space.

12. The computer-readable storage medium of claim 10 or 11,
wherein the further scanning the real-world space is in response to a prompt, rendered by the artificial reality system, to make further movement of the artificial reality system, and
wherein the process further comprises:
obtaining additional characteristics of the real-world space in response to the further movement of the artificial reality system.

13. The computer-readable storage medium of claim one of claims 10 to 12, wherein the process further comprises:
prior to executing the virtual reality experience, determining an interaction mode for the virtual reality experience based on the generated boundary, the interaction mode being based on either A) detecting greater than a threshold amount of movement, of the artificial reality system, while scanning the real-world space, or B) detecting a seated or standing posture of the user having less than the threshold amount of movement;
and optionally, wherein the determined interaction mode is modifiable by the user via the artificial reality system.

14. A computing system for automatically generating a boundary for a virtual reality experience, the computing system comprising:
one or more processors; and
one or more memories storing instructions that, when executed by the one or more processors, cause the computing system to perform a process comprising:
rendering, on an artificial reality system of a user, an artificial reality environment, the artificial reality environment including one or more virtual objects overlaid on a view of a real-world space;
while rendering the artificial reality environment, automatically detecting characteristics of the real-world space by scanning the real-world space, as the artificial reality system is moved, without user input causing the real-world space to be scanned;
detecting a trigger indicative of an intent to execute the virtual reality experience on the artificial reality system;
in response to the detected trigger, generating a boundary for the real-world space based on the detected characteristics of the scanned real-world space; and
executing the virtual reality experience relative to the generated boundary for the real-world space.

15. The computing system of claim 14, wherein the process further comprises:
determining that the generated boundary covers less than a threshold percentage of the real-world space;
based on the determining that the generated boundary covers less than the threshold percentage of the real-world space, further scanning the real-world space by the artificial reality system; and
updating the generated boundary, based on the further scanning of the real-world space;
and/ or
wherein the process further comprises:
based on the detected trigger, and prior to generating the boundary, determining that relocalization, of the artificial reality system in the real-world space, failed.
